# EUROPEAN PATENT APPLICATION

(11) **EP 4 029 768 A1**
(43) Date of publication of application: **20.07.2022**
(21) Application number: 22151038.1
(22) Date of filing: 11.01.2022
(51) Int. Cl.: B62H 5/00, B62J 43/28, B62J 43/30, B62K 19/06, B62K 19/40, B62K 3/04

(54) **ANTI-THEFT DEVICE FOR BICYCLE AND BICYCLE INCLUDING SAID DEVICE**

(30) Priority: 13.01.2021 IT 202100000449
(71) Applicant: Red Pill Products Srl, 70125 Bari (IT)
(72) Inventor: CARENZA, GUIDO, BARI (IT)
(74) Representative: Conversano, Gabriele

(57) **Abstract**

Frame (2) for bicycles, comprising three tubes (20, 21, 22) arranged as a triangle, further comprising a flexible fastening means (1) introduced in a first tube (20), characterized in that said fastening means (1) can be extracted from said first tube through an opening (201) provided on the outer surface of said first tube (20) and it is provided at the end near to said opening (201) with a fastening head (10) and at the opposite end with an end of stroke (11) of greater dimensions than said opening (201) provided on the first tube (20), and in that it further comprises a block means (3) sliding inside a second tube (22) of said frame (2), said block means comprising a housing (31) for coupling said fastening head (10) accessible through an opening (221) realized on the outer surface of said second tube (22), said block means (3) being sliding between a first position in which said fastening head (10) can be engaged with and disengaged from said housing (31), and a second position in which said fastening head cannot be either engaged with or disengaged from said housing.

## Description

### Technical field

The present Patent application relates to an antitheft device for bicycle.

### State of the art

Recently, the market of sustainable transport means and in particular the one of bicycles, electric bicycles and bike sharing services has continuously increased.

By analyzing bicycles selling and production data, it is clear that there is still more room for this kind of means, also considering the European and world politics encouraging a replacement of the endothermic propulsion means with electric mobility.

In this general context, it is observed that the bicycle design has been developed under each point of view and functional element, but a really efficient solution allowing to prevent basically the theft risk thereof has not been individuated yet.

At the state of the art, there are known various examples of embodiments of antitheft devices for bicycles.

In DE876220 an antitheft device for bicycles is described, comprising a lock retractable inside a bar of the bicycle frame. A similar embodiment is shown in US2003089144. A lock fastened to the bicycle frame, but outside to the same is described in DK2014543.

Other examples are described in documents DE3530807, US2015020558, DE9417468.

Document EP3305634 describes a frame for bicycles wherein to the three classic triangle tubes another tubular element is associated, inside which a chain can be introduced, configured to engage a block mechanism provided in the horizontal tube and actuatable from outside.

This embodiment is provided with a series of disadvantages, since it requires the usage of another tube element for the bicycle frame, and this increases the weight and costs and introduces structural discontinuities in the welding spots; moreover, the block mechanism actuatable from outside requires the provision of a mechanical lock, and so it represents a potential attack point for thieves.

US3774421 describes a frame for bicycles, in whose horizontal tube an antitheft chain is slidingly introduced, whose head is configured to engage a block mechanism sliding in the lower tube and configured to be blocked or unblocked by using a mechanical lock.

Additional elements (projections, housings) welded on the tubes are provided both at the exit of the chain from the upper tube and at the input of the chain in the lower tube, and also at the lock. This makes the realization of the frame difficult, increases the weight and introduces attack points for thieves who can attack the additional elements, for example by breaking them, without destructing the structurally resistant portion of the frame. In this way, the thief can disengage the chain without losing the function of the same bicycle, for example by attacking the housing welded on the lower tube.

DE3330840 describes a frame where, from the upper hole of the saddle-holder tube, a chain can be extracted, which is provided with a head with pins couplable with a lock provided on the horizontal tube.

Anyway, these and other embodiments known at the state of the art are limited, since they do not provide an antitheft for bicycles, whose fastening mode reduces sensibly the value of the same bicycle in case of theft, so to discourage a potential thief.

Yet, the embodiments known are difficult to be integrated with bike sharing services, in which the unblocking possibility has to be provided only temporarily to always different users.

### Aim of the invention

Therefore, aim of the invention is to provide an antitheft device for bicycles which overcomes the limits linked to the embodiments known at the state of the art.

According to another aim, the present invention provides an antitheft device for bicycles, whose fastening mode reduces sensibly the value of the bicycle in case of theft.

Yet, the present invention provides an antitheft device for bicycles that keeps its own mechanical resistance, even if it is easily integrable with bike sharing services.

### Brief description of the invention

The present invention realizes the prefixed aims since it is a frame (2) for bicycles, comprising a first horizontal tube (20) inside which a flexible fastening means (1) is slidingly introduced, which can be extracted from said first tube (20) through an opening (201) provided on the outer surface of said first tube (20), a second lower tube (21) and a third upright tube (22),
said flexible fastening means (1) being provided at the end near to said opening (201) with a fastening head (10) and at the opposite end with an end of stroke (11) of greater dimensions than said opening (201),

characterized in that it further comprises a block means (3) for said fastening head (10) sliding inside said upright tube (22), comprising a housing (31) for coupling said fastening head (10) accessible through an opening (221) realized on the outer surface of said upright tube (22), said block means (3) being sliding inside said upright tube (22) between a first position in which said fastening head (10) can be engaged with and disengaged from said housing (31), and a second position in which said fastening head cannot be either engaged with or disengaged from said housing (31), and characterized in that it further comprises electromechanical control means of said block means (3) configured to allow or prevent the passage of said block means (3) from the one to the other one of said positions and control electronic means provided with remote communication means configured to control said electromechanical means.

### Description of the figures

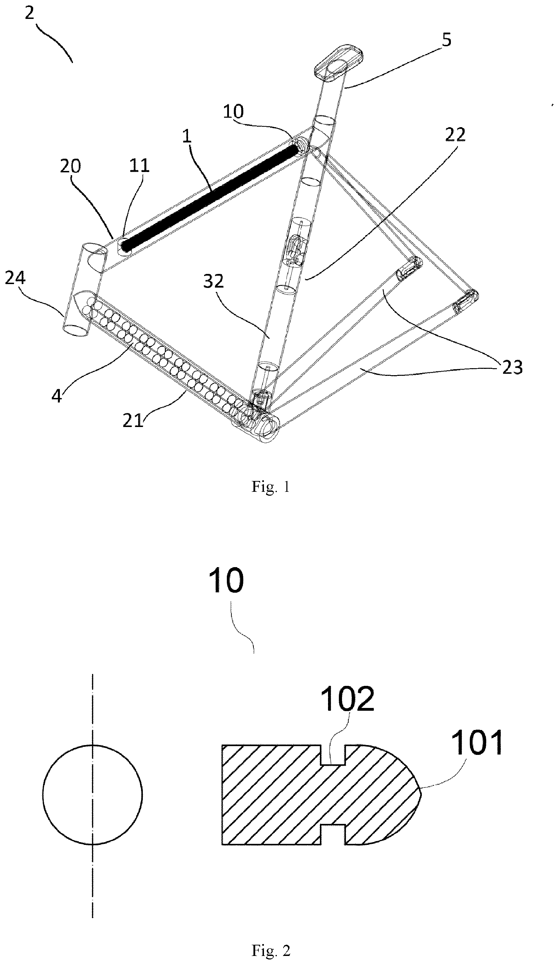

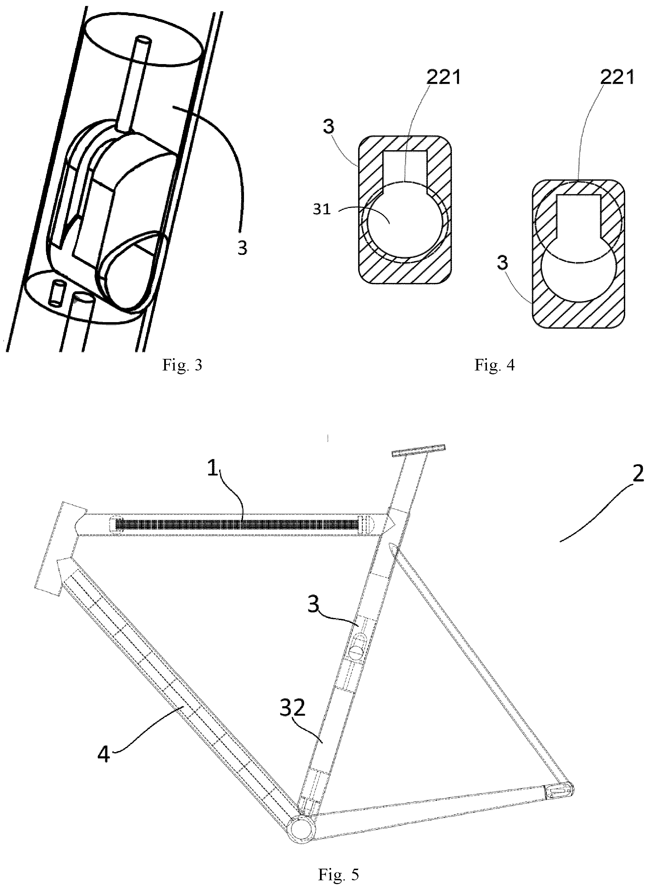

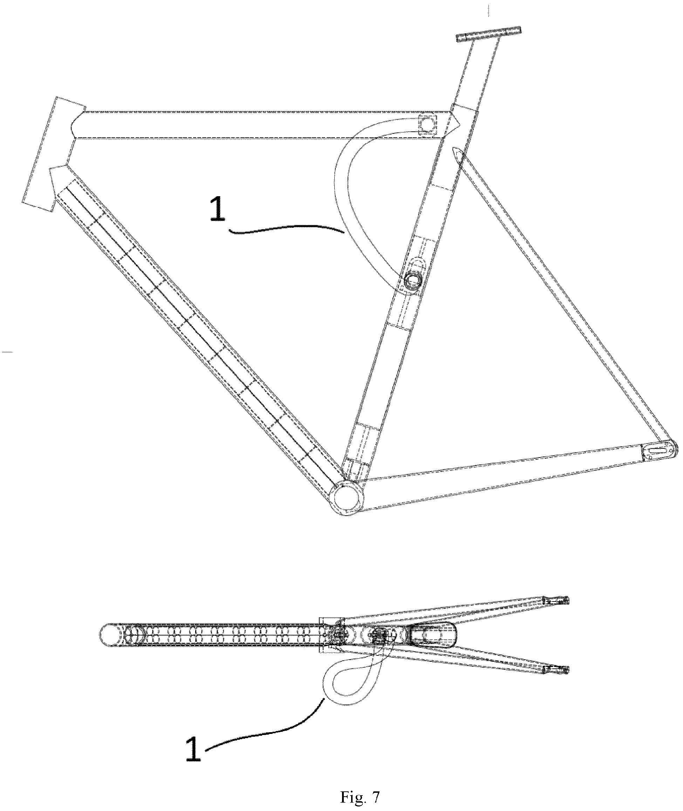

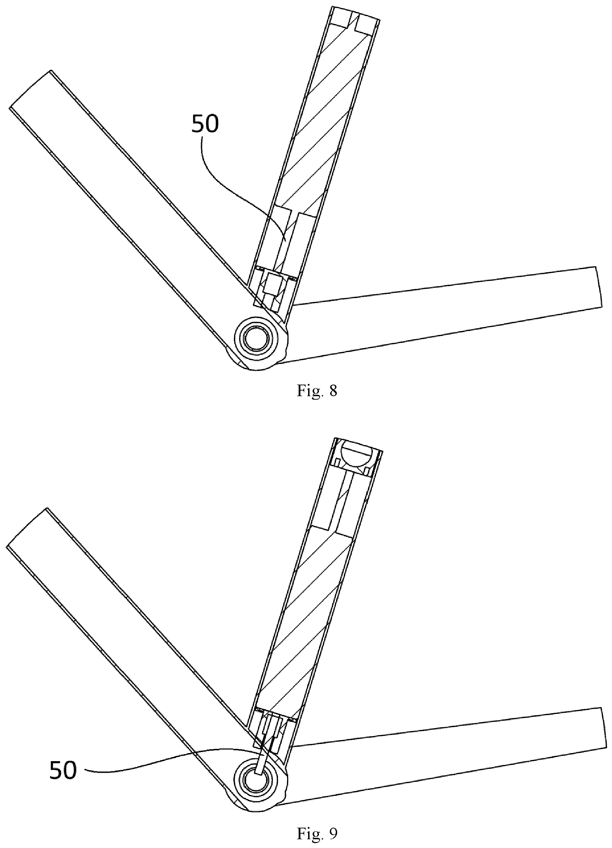

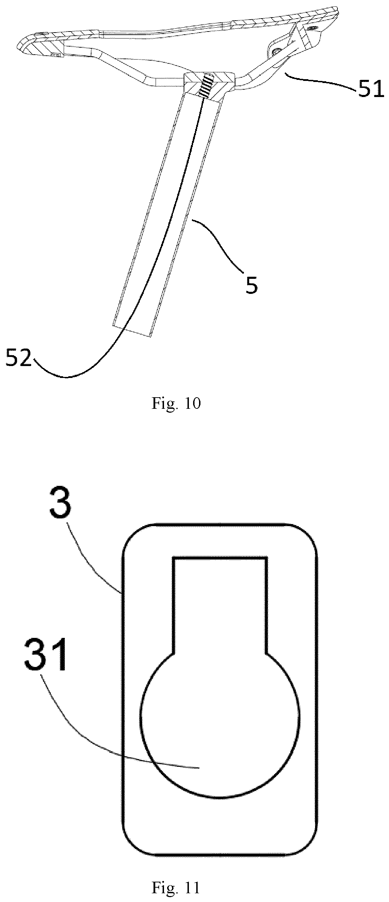

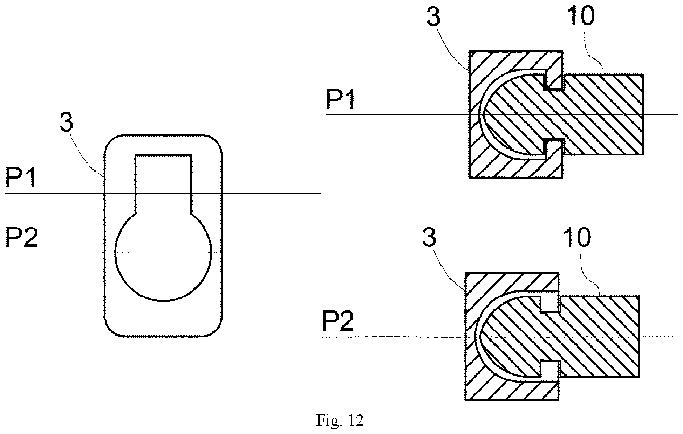

Figure 1 shows a view of a preferred embodiment of the invention, with the flexible fastening means inside the bicycle frame; figure 2 shows a preferred, not limiting, embodiment of the fastening head according to the invention; figure 3 shows a detail view of a preferred embodiment of the fastening means; figure 4 shows a schematic view of the functioning of the fastening means; figures 5, 6 and 7 show two views of the frame with the flexible fastening means inside the tube, extracted from the same and engaged in the block means, respectively; figures 8 and 9 show a schematic view of the functioning of the pedal block means; figures 11 and 12 show a schematic view of the functioning of the block means.

### Detailed description of the invention

Figure 1 shows a frame (2) for bicycles, comprising three tubes (20, 21, 22) with a steering tube (24) fastened between a first horizontal tube (20) and a second lower tube (21), and struts (23) for fastening the rear wheel, fastened to the third upright tube (22).

In a first embodiment, said three tubes are arranged as a triangle, even if this is not essential for the aims of the invention. Furthermore, even if not essential for the invention, figure 1 shows also a saddle-holder tube (5), slidingly introduced inside the third upright tube (22).

As it is observed in figure 1, the frame (2) for bicycles according to the invention comprises also a flexible fastening means (1) introduced in said first horizontal tube (20). The fastening means (1) can be extracted from the tube through an opening (201) provided on the outer surface of said first tube (20) and it is provided with a fastening head (10) at the end near said opening (201). Preferably, said flexible fastening means (1) is a steel cable, or a chain.

Preferably but not limitingly, said flexible element comprises a plurality of cables in stainless steel braided to each other, individually protected by cylindrical elements.

Moreover, preferably, said fastening head (10) is an axial-symmetrical shaped solid comprising a rounded head (101) and a circumferential groove (102), as it is shown in figure 2.

The flexible fastening means (1) is also provided at the opposite end with an end of stroke (11) of greater dimensions than the opening (201) provided on the first tube (20), so that the fastening means cannot be completely extracted from the first horizontal tube (21).

The device is characterized in that it comprises a block means (3) for said fastening head (10) introduced inside the upright tube (22) of said frame (2), said block means comprising a housing (31) for coupling the fastening head (10), said housing (31) being accessible through an opening (221) realized on the outer surface of said upright tube (22).

The block means (3) is sliding inside said upright tube (22) between a first position in which said fastening head (10) can be engaged with and disengaged from said housing (31), and a second position in which said fastening head cannot be either engaged with or disengaged from said housing.

Figure 4 shows a schematic view of the two positions of the block means (3) for said fastening head (10) with respect to the opening (221) provided on the upright tube (22), shown in dotted line. In a first embodiment shown in axonometric view in figure 3, the block means (3) for said fastening head (10) comprises a shaped opening, having a first portion in which the end (101) of the fastening head (10) can come into, and a second portion which can slidingly engage the groove (102) of said fastening head, thus preventing the sliding thereof.

The functioning of the block means is also shown schematically in figures 11 and 12.

In particular, figure 12 shows two top section views of the situations in which the block means (3) at the height of the axis of the fastening head (10) is provided respectively with the horizonal plane P1 corresponding to the block position, and the horizontal plane P2 corresponding to the disengaging position.

In the two positions taken by the fastening means, the one or the other one of said opening portions are so alternately aligned with the opening (221) positioned on the tube. The engagement of the housing (31) by the fastening head (10) occurs by means of the introduction in radial direction through said opening (221) on the surface of said second tube (22). It is to be specified that the word radial is referred to an embodiment in which said second tube has circular section. Obviously, in case said second tube has not a circular section (for example rectangular or elliptical), the introduction direction will be from outside to inside the tube, preferably but not limitingly in substantially orthogonal direction to the surface of the same tube.

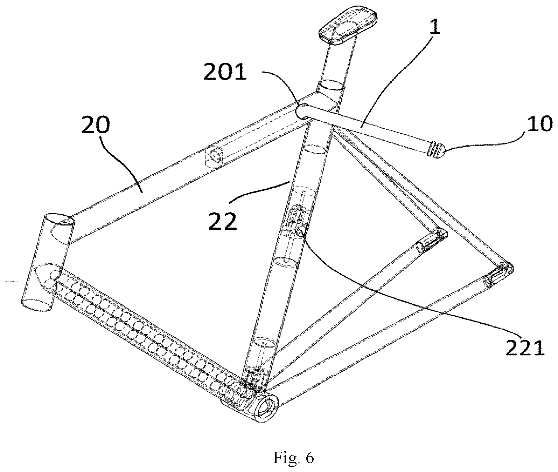

Moreover, it is to be highlighted how the opening (221) of the upright tube (22), as it is visible in figure 6, is realized directly in the surface of the tube, and no additions of any kind are needed outside the tube. In other words, the space taken by the block means (3) and relative actuation means, described in the following, in all the positions, always remains completely inside the upright tube (22). It is clear that, even if it is not shown in figure, the system can be realized with different configuration of said opening (221) realized on said second tube (22), and so the introduction direction can be different from the radial one, without departing from the aims of the present invention. For example, the introduction direction can be inclined with respect to the tube axis. In a preferred embodiment, the saddle-holder tube (5) is integral to said block means (3), and both are integral to a pedal block means (50), configured to block the bicycle central movement, also slidingly introduced inside the upright tube (22) and configured so to block the bicycle central movement (pedals and crowns) when said block means (3) for said fastening head (10) is in said second position in which said fastening head (10) cannot be either engaged with or disengaged from said housing.

In this way, when the fastening head (10) is blocked, also the bicycle central movement is blocked.

Figure 8 shows the block means (50) for the bicycle central movement in its first position. Figure 9 shows the block means (50) in the second position, in which the head of said block means is interfering with the bicycle central movement, thus preventing the rotation of pedals and crowns. It is clear that, to such aim, the bicycle central movement comprises, on its own axis, one or more radial housings configured to house said block means (50).

Moreover, preferably, the device according to the invention comprises movement electric means (32) of said sliding block means (3), introduced also inside said second tube (2), and control electronic means, configured to actuate said movement electric means (32) and provided with communication means with a remote device.

Preferably, but not limitingly, said movement electric means comprise an electromagnet. Other axial movement means of the block means (3) for said fastening head (10) inside the tube can be used without departing from the aims of the invention.

In this way, the usage of the bicycle is allowed only after a communication between said communication means and a remote device.

In another embodiment, the frame of the bicycle according to the invention comprises, introduced inside said upright tube (22), an electromechanical device configured to prevent the movement of the sliding block means (3). Such electromechanical device is configured in particular to take a first position in which it prevents the movement of the sliding block means (3) and a second position in which it allows the movement of said sliding block means (3). Moreover, it is configured to pass from the one to the other one of said positions after the actuation by a remote device.

Preferably, said device comprises a pin controlled by means of a solenoid, an electromagnet or similar device. Also in this case, the frame comprises control electronic means provided with communication means with a remote device.

After the unblocking, which can occur only by means of the communication between a remote device and the control electronic means, the user, by acting on the bicycle saddle, can make both the block means of the central movement and the sliding means for the fastening head of the flexible cable slide manually.

Also in this embodiment, the usage of the bicycle is allowed only after a communication between said communication means and a remote device. Concerning the communication means with a remote device, any communication technology of Near Field kind (the Bluetooth technology as a way of absolutely not limiting example) can be used to communicate with a remote device.

Said control electronic means will be configured to move said block means (3) in order to allow the unblocking of the fastening head (10) or to control said device configured to prevent the movement of the sliding block means (3) only after the communication with a remote device.

This will implement, without departing from the aims of the invention, various management logics, from the "private" management and for personal use of the bicycle to the management of the bicycle for services like bike sharing.

Moreover, preferably, as it is shown in figure 10, the fastening of the saddle (51) to the saddle-holder tube (5) occurs by means of a threaded connection (52) which can be disengaged only by accessing with a tool from the base of the saddle-holder tube.

In this case, the saddle-holder is configured to be disengaged from the frame only when the sliding block means (3) is in the position in which the head of the flexible fastening means can be disengaged. This allows to avoid thefts of saddles, which are frequent especially in case of saddles of good manufacture and considerable economical value. The device comprises also a battery pack (4), preferably introduced inside said third tube (21) of the frame (2).

The present invention provides also a bicycle comprising a frame of the just described type.

Said bicycle can be possibly electrically-actuated, and in such case such battery pack (4) can be configured to supply the electric motor of said bicycle.

## Claims

1. Frame (2) for bicycles, comprising a first horizontal tube (20) inside which a flexible fastening means (1) is slidingly introduced, which can be extracted from said first tube (20) through an opening (201) provided on the outer surface of said first tube (20), a second lower tube (21) and a third upright tube (22), said flexible fastening means (1) being provided at the end near to said opening (201) with a fastening head (10) and at the opposite end with an end of stroke (11) of greater dimensions than said opening (201),
**characterized in that** it further comprises a block means (3) for said fastening head (10) sliding inside said upright tube (22), comprising a housing (31) for coupling said fastening head (10) accessible through an opening (221) realized on the outer surface of said upright tube (22),
said block means (3) being sliding inside said upright tube (22) between a first position in which said fastening head (10) can be engaged with and disengaged from said housing (31), and a second position in which said fastening head cannot be either engaged with or disengaged from said housing (31),
and **characterized in that** it further comprises electromechanical control means of said block means (3) configured to allow or prevent the passage of said block means (3) from the one to the other one of said positions and control electronic means provided with remote communication means configured to control said electromechanical means.

2. Frame (2) for bicycles according to claim 1, **characterized in that** said fastening head (10) is an axial-symmetrical shaped solid, comprising a rounded head (101) and a circumferential groove (102) .

3. Frame (2) for bicycles according to claim 2, **characterized in that** the space taken by the block means (3) and said electromechanical control means of said block means (3), in all the positions, always remains completely inside the upright tube (22) .

4. Frame (2) for bicycles according to claim 2, **characterized in that** said housing (31) comprises a shaped opening, having a first portion in which the end (101) of the fastening head (10) can come into, and a second portion which can slidingly engage the circumferential groove (102) of said fastening head (10), thus preventing the sliding thereof.

5. Frame (2) for bicycles according to claim 3, **characterized in that** the engagement of the housing (31) by the fastening head (10) occurs by means of the introduction in radial direction through said opening (221).

6. Frame (2) for bicycles according to any one of the preceding claims, **characterized in that** said electromechanical control means of said block means (3) comprise movement electric means (32) of said block means (3).

7. Frame (2) for bicycles according to any one of the preceding claims, **characterized in that** said electromechanical control means of said block means (3) comprise an electromechanical device configured to prevent or allow the movement of said sliding block means (3).

8. Frame (2) for bicycles according to any one of the preceding claims, further comprising a saddle-holder tube (5) integral to said block means (3), and a pedal block means (50) integral to said block means (3) as well and slidingly introduced inside the upright tube (22), said pedal block means (50) being configured to block the movement of the pedals when said block means (3) is in said second position.

9. Frame (2) for bicycles according to any one of the preceding claims, **characterized in that** it further comprises a battery pack (4) introduced inside said third tube (21) of the frame (2).

10. Frame (2) for bicycles according to any one of the preceding claims, **characterized in that** it further comprises a steering tube (24) fastened between said first (20) and second tube (21), and struts (23) for fastening the rear wheel, fastened to the third tube (22).

11. Frame (2) for bicycles according to any one of the preceding claims, **characterized in that** said flexible fastening means (1) is a steel cable or a chain.

12. Bicycle comprising a frame according to any one of the preceding claims.
